# EUROPÄISCHE PATENTSCHRIFT

(11) **EP 3 253 610 B1**
(45) Veröffentlichungstag und Bekanntmachung des Hinweises auf die Patenterteilung: **07.07.2021**
(21) Anmeldenummer: 16702063.5
(22) Anmeldetag: 26.01.2016
(51) Int. Cl.: B60L 53/62

(54) **VERFAHREN UND SYSTEM ZUR ERZEUGUNG EINES LADEZEITPLANS EINES ELEKTRISCHEN ENERGIESPEICHERS IN EINEM FAHRZEUG**
METHOD AND SYSTEM FOR GENERATING A CHARGING SCHEDULE FOR AN ELECTRIC STORAGE IN A VEHICLE
PROCÉDÉ ET SYSTÈME DE GÉNÉRATION D'UN PROGRAMME DE CHARGE D'UN ACCUMULATEUR D'ÉNERGIE ÉLECTRIQUE DANS UN VÉHICULE

(30) Priorität: 04.02.2015 DE 102015201897
(43) Veröffentlichungstag der Anmeldung: 13.12.2017
(73) Patentinhaber: Volkswagen Aktiengesellschaft, 38440 Wolfsburg (DE)
(72) Erfinder: BREUEL, Matthias, 38440 Wolfsburg (DE); REINSCHLÜSSEL, Anke, 28844 Weyhe (DE)
(86) Internationale Anmeldenummer: PCT/EP2016/051551
(87) Internationale Veröffentlichungsnummer: WO 2016/124446

(56) Entgegenhaltungen:
- DE-A1-102012 007 126
- JP-A- 2011 166 870
- US-A1- 2013 274 972

## Beschreibung

Die vorliegende Erfindung betrifft ein Verfahren zur Erzeugung und Ausgabe eines Zeitplans zum automatischen Laden eines elektrischen Energiespeichers in einem Fahrzeug. Ferner betrifft die Erfindung ein System zur Erzeugung und Ausgabe eines Zeitplans zum automatischen Laden eines elektrischen Energiespeichers in einem Fahrzeug.

Für den Betrieb von Fahrzeugen, die über einen elektrischen Antrieb verfügen, ist die Möglichkeit entscheidend, den Energieinhalt des elektrischen Energiespeichers zeitgenau planen zu können. Dies ist umso mehr von Bedeutung, da das Laden eines elektrischen Energiespeichers typischerweise lange Zeit benötigt. Elektrisch angetriebene Fahrzeuge werden daher häufig über Nacht an eine Ladestation angeschlossen. Für den Ladevorgang steht dann die Zeit bis zum geplanten Abfahrtszeitpunkt, etwa am nächsten Morgen, zur Verfügung. Der Ladevorgang kann in diesem Zeitraum flexibel gestaltet werden, um beispielsweise den Ladestrom niedrig zu halten, was die Lebensdauer der Batterie verlängert, oder um kostengünstige Nachtstromzeiträume zu nutzen, in denen elektrische Energie kostengünstiger aus dem Versorgungsnetz entnommen werden kann. Mit fortschreitender Umstellung auf regenerative Energieerzeugung wird die intelligente Steuerung der Auslastung der Energieversorgungsnetze weiter an Bedeutung gewinnen.

Um zu einem bestimmten Zeitpunkt einen bestimmten Energieinhalt des elektrischen Energiespeichers bereitstellen zu können, muss ein Zeitplan erzeugt werden, durch den der zeitliche Ablauf des Ladevorgangs festgelegt ist. Wie oben bereits beschrieben, ist bei der Erzeugung dieses Zeitplans eine Vielzahl von Parametern zu berücksichtigen, was die Planung des Ladevorgangs zu einer komplexen Aufgabe macht. Für den Benutzer des Fahrzeugs ist es daher von großer Bedeutung, dass die Parameter des Zeitplans vollständig und leicht erfassbar dargestellt werden, um den Zeitplan intuitiv zu verstehen und die Konsequenzen einer Änderung von Parametern unmittelbar abschätzen zu können.

Die in der DE 10 2010 010 443 A1 beschriebene Anzeigevorrichtung zeigt den Betriebsmodus eines Hybridfahrzeugs an. Konkret werden der Füllstand des Kraftstofftanks und der Energieinhalt der elektrischen Batterie angezeigt. Ferner wird der Betriebsmodus des Fahrzeugs angezeigt, insbesondere kann angezeigt werden, wie lange ein "elektromotorisches Boosten" beim derzeitigen Energieinhalt der Batterie durchgeführt werden kann.

Die DE 10 2011 116 314 A1 beschreibt ein Verfahren zur Anzeige von Betriebsparametern eines Hybridfahrzeugs. Auf einem Anzeigeinstrument werden Informationen zur Drehzahl des Verbrennungsmotors und Informationen über den Energieumsatz des Elektromotors angezeigt. Ferner wird ein optimaler Rekuperationspunkt angezeigt, bei dem ein Maximum an rekuperierbarer Energie als elektrische Energie speicherbar ist.

Das in der DE 10 2009 038 431 A1 beschriebene Verfahren zum Betreiben eines Fahrzeugs mit einem elektrischen Antrieb und einem elektrischen Energiespeicher sieht vor, dass der Benutzer eine geplante Abfahrtszeit einstellt. Das Laden des Energiespeichers wird automatisch gesteuert. Ferner kann das Fahrzeug zu der vorgegebenen Abfahrtszeit klimatisiert werden. Die Einstellungen erfolgen in einzelnen Menüs, die von einem Grundmenü aus aktiviert werden.

Die JP 2011-166870 A beschreibt eine Ladevorrichtung für ein Kraftfahrzeug. Die Ladevorrichtung enthält einen Stromverteiler, der die von mehreren Stromquellen an eine Batterie gelieferte Energie passend verteilt, um die Batterie aufzuladen. Eine Stromverteilungssteuereinheit steuert die Stromverteilung an die Batterie durch den Stromverteiler gemäß einem Ladeplan, der von einer Ladeplanvorbereitungseinheit erstellt wird. Die Ladeplanvorbereitungseinheit erhält bei der Erstellung eines Ladeplans verschiedene Informationen aus einer Datenbank. Die Ladeplanvorbereitungseinheit erstellt mehrere Ladepläne auf der Grundlage verschiedener Gesichtspunkte. Der Benutzer wird mittels einer Benachrichtigungseinheit über diese Ladepläne informiert.

Die DE 10 2012 007 126 A1 beschreibt ein Verfahren zum Steuern des Aufladevorgangs eines elektrischen Energiespeichers. Bei dem Verfahren wird der Ladezustand des elektrischen Energiespeichers erfasst, es wird eine mit einem Parameter des Aufladevorgangs assoziierte Vorgabe erfasst und es wird aus einer Vielzahl möglicher Aufladevorgänge ein solcher Aufladevorgang ausgewählt, welcher die erfasste Vorgabe erfüllt. Dabei wird der Zeitverlauf wenigstens zweier möglicher Aufladevorgänge visualisiert, von denen wenigstens einer ausgewählt wurde oder die erfasste Vorgabe erfüllt.

Der vorliegenden Erfindung liegt die Aufgabe zugrunde, ein Verfahren und ein System der eingangs genannten Art zur Verfügung zu stellen, wobei dem Benutzer Informationen vermittelt werden, um ein Laden eines Energiespeichers bis zu einem gewünschten Zielladezustand und zu einem gewünschten Endzeitpunkt zu ermöglichen.

Erfindungsgemäß wird diese Aufgabe durch ein Verfahren mit den Merkmalen des Anspruchs 1 und ein System mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren sind zumindest zwei Lademodi für einen Energiespeicher definiert, nämlich ein Sofortlademodus, bei dem der Ladevorgang sofort nach dem Verbinden des Energiespeichers mit einer Ladeeinrichtung beginnt, und ein Programmlademodus, bei dem der Beginn des Ladevorgangs durch den Zeitplan bestimmt wird. Daten über einen Energieinhalt des Energiespeichers und einen von der Ladeeinrichtung bereitstellbaren Ladestrom werden erfasst, ferner werden Benutzereingaben zu dem automatischen Laden des elektrischen Energiespeichers erfasst. Anhand der erfassten Daten und der Benutzereingaben wird ein Zeitplan zum automatischen Laden des Energiespeichers erzeugt. Wenn das Fahrzeug im Programmlademodus nicht mit einer Ladeeinrichtung verbunden ist, wird anhand des Energieinhalts, des bereitstellbaren Ladestroms und eines Endzeitpunkts des geplanten Ladevorgangs ein spätester Verbindungszeitpunkt bestimmt, zu dem das Fahrzeug mit einer Ladeeinrichtung verbunden werden muss, um einen Zielladezustand bis zum geplanten Endzeitpunkt zu erreichen. Zudem wird ein Erinnerungszeitpunkt bestimmt, der vor dem spätesten Verbindungszeitpunkt liegt, und es wird eine Erinnerungsmeldung ausgegeben, wenn bei Erreichen des Erinnerungszeitpunkts das Fahrzeug nicht mit einer Ladeeinrichtung verbunden ist. Anhand des Zeitplans werden Graphikdaten mit mehreren graphischen Objekten erzeugt und gleichzeitig angezeigt. Dabei umfasst ein erstes graphisches Objekt ein für alle Lademodi des Energiespeichers übergreifendes Graphikelement, welches eine Zeitskala darstellt und an dem weitere graphische Objekte angeordnet sind, die den Zeitdaten des Zeitplans zugeordnet sind. Ein zweites graphisches Objekt ist dem Anfangs- und dem Endzeitpunkt des geplanten Ladevorgangs zugeordnet, ein drittes graphisches Objekt ist dem Ladestrom zugeordnet und ein viertes graphisches Objekt ist dem spätesten Verbindungszeitpunkt zugeordnet.

Bei dem erfindungsgemäßen Verfahren wird also danach unterschieden, ob der Energiespeicher des Fahrzeugs sofort nach dem Verbinden mit einer Ladeeinrichtung geladen werden soll (Sofortlademodus) oder ob der Ladevorgang mittels einer Timerfunktion programmiert werden soll (Programmlademodus). In diesen beiden Lademodi sind natürlicherweise verschiedene Parameter zur Planung und Steuerung des Ladevorgangs erforderlich und müssen bei der Ausgabe für den Benutzer berücksichtig werden.

Zur Ausgabe des Zeitplans erzeugt die Steuereinheit Graphikdaten, wobei erfindungsgemäß alle relevanten Parameter gleichzeitig dargestellt werden. Zu diesen Parametern gehören der Anfangszeitpunkt und der Endzeitpunkt des Ladevorgangs. Ferner werden graphische Objekte angezeigt, die dem verfügbaren Ladestrom zugeordnet sind. Der Benutzer kann auf vorteilhafte Weise erkennen, in welchem Zeitraum das Laden der Batterie geplant ist, und er kann schnell und intuitiv abschätzen, welche Folgen eine Veränderung der Parameter für den gesamten Zeitplan haben wird. Die Anzeige ist dadurch besonders leicht und schnell erfassbar, weil sie ein übergreifendes Graphikelement umfasst, an dem die Zeitdaten intuitiv verständlich dargestellt werden. Ein solches Graphikelement kann eine Uhr symbolisieren, aber auch eine lineare Zeitachse oder die Darstellung eines Kalenders.

Durch das vierte graphische Objekt wird der Benutzer vorteilhafterweise darauf hingewiesen, wann das Fahrzeug spätestens mit einer Ladeeinrichtung verbunden werden muss, um den Zeitplan ausführen zu können. Da geeignete Ladeeinrichtungen nicht jederzeit und überall verfügbar sind, muss der Benutzer das Verbinden des Fahrzeugs mit einer solchen Ladeeinrichtung im Voraus planen. Die Verbindung darf dabei nicht zu spät erfolgen, um ein Laden des Energiespeichers zum gewünschten Energieinhalt und zur gewünschten Zeit zu ermöglichen. Indem der späteste Verbindungszeitpunkt graphisch angezeigt wird, erkennt der Benutzer schnell und intuitiv, bis wann er das Fahrzeug mit der Ladeeinrichtung verbunden haben muss.

Erfindungsgemäß wird ein Erinnerungszeitpunkt bestimmt, der vor dem spätesten Verbindungszeitpunkt liegt, und eine Erinnerungsmeldung wird ausgegeben, wenn bei Erreichen des Erinnerungszeitpunkts das Fahrzeug nicht mit einer Ladeeinrichtung verbunden ist. Ferner können die Graphikdaten ein Objekt umfassen, das dem Erinnerungszeitpunkt zugeordnet ist und diesen aus der angezeigten Darstellung erfassbar macht. Dadurch wird der Benutzer auf vorteilhafte Weise darauf hingewiesen, dass er das Fahrzeug mit einer Ladeeinrichtung verbinden muss, um das gewünschte Aufladen durchführen zu können.

Das Graphikelement ist gemäß der Erfindung "übergreifend", weil es zur Darstellung von Zeitdaten in allen Lademodi des Energiespeichers verwendet wird. Es ist ein wiederkehrendes Element der Anzeige, im Sofortlademodus wie im Programmlademodus, ob das Fahrzeug mit einer Ladeeinrichtung verbunden ist oder nicht. Zudem umfassen die Graphikdaten die wesentlichen Parameter zur Erzeugung des Zeitplans. Der Benutzer muss also nicht mehrere Menüs aufrufen oder andere Bedienschritte ausführen, um die relevanten Parameter zur Erstellung des Zeitplans und den Zeitplan selbst zu erfassen. Stattdessen sind insbesondere alle Zeitdaten am selben Graphikelement dargestellt. Dies hat zudem den Vorteil, dass die Darstellung des Zeitplans in wiedererkennbarer Weise erfolgt, etwa wenn sie in verschiedenen Fahrzeugmodellen ähnlich implementiert ist.

Die graphische Darstellung kann auch anzeigen, ob das Fahrzeug mit einer Ladeeinrichtung verbunden ist. Während des Ladevorgangs kann etwa ein bestimmtes graphisches Objekt angezeigt oder in seiner Darstellung verändert werden, etwa das Symbol eines Steckers, der durchgestrichen ist, wenn keine Ladeeinrichtung verbunden ist. Ein graphisches Objekt kann ferner seine Helligkeit dynamisch verändern, beispielsweise blinken oder blitzen, oder seine Farbe ändern, etwa zwischen Rot und Grün wechseln. Ferner kann sich ein graphisches Objekt innerhalb der Anzeige bewegen, beispielsweise kann eine kreisende Bewegung signalisieren, dass der Ladevorgang ausgeführt wird, während der Stillstand desselben Objekts Warten auf das Verbinden mit der Ladeeinrichtung signalisiert. Auf diese Weise wird dem Benutzer signalisiert, dass das Fahrzeug gerade einen Ladevorgang durchführt, dass also der Zeitplan zum Laden des Energiespeichers durchgeführt wird.

Bei einer Ausbildung des erfindungsgemäßen Verfahrens umfassen die Graphikdaten im Programmlademodus ferner graphische Objekte zur Wiederholung des programmierten Zeitplans. Beispielsweise kann ein Zeitplan für jeden der Tage von Montag bis Freitag definiert werden, während für Samstag und Sonntag ein anderer Zeitplan erzeugt wird. Ferner kann ein Zeitplan einmalig ausgeführt werden. Diese Wiederholungen können beispielsweise durch die Anzeige eines entsprechenden Textes und/oder Symbols gekennzeichnet werden. Der Benutzer kann auf diese Art vorteilhafterweise sofort erkennen, wann der angezeigte Zeitplan ausgeführt wird.

Wenn die geplante oder tatsächliche Verbindung des Fahrzeugs mit einer Ladeeinrichtung zu spät erfolgt, um den gewünschten Energieinhalt des Energiespeichers bis zum geplanten Abfahrtszeitpunkt zu erreichen, dann kann eine Warnmeldung ausgegeben werden. Der Benutzer kann auf diese Weise erkennen, wenn der geplante Ladevorgang nicht zum gewünschten Ergebnis führen kann. Die Graphikdaten können in diesem Fall den voraussichtlichen Energieinhalt des Energiespeichers am Ende des geplanten Ladevorgangs umfassen. Ferner können Alternativen dargestellt werden, wie der Konflikt etwa durch Wahl eines höheren Ladestroms, einer späteren Abfahrtszeit oder eines früheren Verbindungszeitpunkts zu beheben ist.

Bei einer Weiterbildung wird die Erinnerungsmeldung an eine mobile Nutzervorrichtung übertragen und von dieser ausgegeben. Eine solche mobile Nutzervorrichtung kann ein Mobiltelefon sein, auf dem zum Erinnerungszeitpunkt eine Erinnerungsmeldung angezeigt wird. Zur Ausgabe einer solchen Meldung können Kurzmitteilungsdienste genutzt werden, aber auch "Push-Benachrichtigungen", bei denen eine Meldung direkt auf dem Mobiltelefon angezeigt wird, oder spezialisierte Programme, sogenannte "Apps", die etwa über das Internet Informationen aus dem Fahrzeug abrufen, verarbeiten und Erinnerungsfunktionen auf dem Mobiltelefon ausführen. Der Benutzer wird so in vorteilhafter Weise an den spätesten Verbindungszeitpunkt erinnert, selbst wenn er sich nicht im Fahrzeug befindet.

In einer Ausbildung des erfindungsgemäßen Verfahrens umfasst das Fahrzeug eine Klimatisierungseinheit. Die erfassten Benutzereingaben umfassen ferner Daten über eine geplante Klimatisierung des Fahrzeugs, der erzeugte Zeitplan umfasst Zeitdaten zur Klimatisierung und die angezeigten Graphikdaten umfassen ferner Daten über die Klimatisierung des Fahrzeugs. Der Benutzer kann somit mittels des Zeitplans die Klimatisierung des Fahrzeugs so vorausplanen, dass beispielsweise zu einer bestimmten Abfahrtszeit das Fahrzeug auf eine bestimmte Temperatur vorgeheizt oder gekühlt wird. Die Daten über die Klimatisierung des Fahrzeugs werden in die Anzeige des Zeitplans zum Aufladen der Batterie integriert, so dass der Benutzer weitere wichtige Informationen darüber erfasst, welche Vorgänge im Fahrzeug automatisch durchgeführt werden, bevor er beispielsweise am nächsten Morgen losfährt. Die Daten über eine geplante Klimatisierung können beispielsweise eine Solltemperatur umfassen, ferner kann die Klimatisierung an- und ausgeschaltet werden.

Bei einer Weiterbildung der Erfindung wird die Temperatur innerhalb und/oder außerhalb des Fahrzeugs erfasst und die anzeigten Graphikdaten umfassen ferner Daten über die erfasste Temperatur. Dies ist insbesondere für die Klimatisierung des Fahrzeugs von Bedeutung, da die Temperaturdifferenz zwischen Fahrzeuginnenraum und -außenraum die für die Klimatisierung notwendige Zeit bestimmt. Der Benutzer kann vorteilhafterweise diese wichtigen Parameter der Anzeige entnehmen.

Bei einer Ausbildung der Erfindung werden die erzeugten Graphikdaten an eine mobile Nutzervorrichtung übertragen und von dieser ausgegeben. Die mobile Nutzervorrichtung kann wiederum ein Mobiltelefon sein, es kann sich aber auch über einen elektronischen Terminplaner (PDA), einen Computer oder eine geeignete Uhr handeln. Der Benutzer kann auf vorteilhafte Weise sämtliche für den Zeitplan relevanten Parameter einer einfachen und intuitiv verständlichen Darstellung entnehmen, selbst wenn er sich nicht im Fahrzeug befindet. Wie bereits oben beschrieben, können verschiedene Dienste eingesetzt werden, um aus der Ferne auf die Daten des Fahrzeugs zuzugreifen. Informationen können etwa durch Kurzmitteilungsdienste übertragen werden, ferner können "Push-Benachrichtigungen" verwendet werden, um eine Meldung etwa direkt auf einem Mobiltelefon anzuzeigen. Anwendungsprogramme, die beispielsweise auf dem Computer, dem PDA oder dem Mobiltelefon implementiert sein können, und etwa über das Internet Informationen aus dem Fahrzeug abrufen, können diese Informationen verarbeiten und so die Grafikdaten auf der mobilen Nutzervorrichtung anzeigen.

Analog zur oben beschriebenen Übertragung der Graphikdaten können in einer weiteren Ausbildung auch weitere Daten vom Fahrzeug an eine mobile Nutzervorrichtung übertragen werden. Diese Daten können beispielsweise die erfassten Daten zum Energieinhalt des Energiespeichers und zu dem von der Ladeeinrichtung bereitstellbaren Ladestrom gehören, aber auch die erfassten Benutzereingaben. Ferner können der Zeitplan selbst oder die Parameter zur Erstellung des Zeitplans vom Fahrzeug zur mobilen Nutzervorrichtung übertragen werden. Auf diese Weise kann auf der mobilen Nutzervorrichtung beispielsweise eine eigene graphische Darstellung des Zeitplans erzeugt werden, die sich an den Gegebenheiten des jeweiligen Geräts, etwa an der Größe des Displays, orientiert. Beispielsweise kann eine solche graphische Darstellung gegenüber der im Fahrzeug erzeugten Darstellung reduziert sein und weniger Informationen bereitstellen, um auf einem kleinen Display die Übersichtlichkeit zu wahren. Andererseits kann auf einem größeren Computerbildschirm eine umfassendere Darstellung angezeigt werden, um den zur Verfügung stehenden Platz zu nutzen.

Bei einer Weiterbildung des erfindungsgemäßen Verfahrens können außerdem Daten von einer mobilen Nutzervorrichtung erfasst und zum Fahrzeug übertragen werden. Dies erweitert die Möglichkeiten zur Eingabe insbesondere von Benutzereingaben. Beispielsweise kann ein Benutzer von einem datentechnisch mit dem Fahrzeug gekoppelten Computer aus die Zeitdaten für den gewünschten Zeitplan eingeben, etwa die gewünschte Abfahrtszeit, selbst wenn er sich nicht im Fahrzeug befindet. Ferner ist eine Koppelung mit anderen Systemen möglich, zum Beispiel kann ein Terminplaner-Programm des Benutzers die Parameter zur Planung des Ladevorgangs automatisch an das Fahrzeug übertragen, sodass der Energiespeicher automatisch so aufgeladen wird, dass in den Terminplan eingetragene Termine erreicht werden können.

Bei einer Ausbildung des erfindungsgemäßen Verfahrens umfassen die erfassten Benutzereingaben Zeitdaten zu Zeiträumen und diese Zeiträume werden bei der Erzeugung des Zeitplans priorisiert. Der Benutzer kann auf diese Weise zum Beispiel solche Zeiträume definieren, in denen die aus dem Versorgungsnetz entnommene Energie besonders kostengünstig ist. Umgekehrt können besonders kostenintensive Zeiträume definiert werden. Bei der Erzeugung des Zeitplans werden für die Durchführung des Ladevorgangs bevorzugt solche Zeiträume berücksichtigt, in denen das Aufladen besonders günstig ist. So kann vorteilhafterweise die Entnahme elektrischer Energie aus dem Versorgungsnetz so gestaltet werden, dass die Kosten für den Betrieb des Fahrzeugs minimiert werden.

Mit der fortschreitenden Umstellung der Energiegewinnung auf regenerative Energiequellen, wie etwa Sonne und Wind, gewinnt die intelligente Verwaltung der Auslastung der Energieversorgungsnetze an Bedeutung. Elektrische Energie soll im besten Falle genau dann entnommen werden, wenn ein Übermaß zur Verfügung steht, während in Zeiten geringerer Energieproduktion auch die Auslastung des Versorgungsnetzes minimiert werden soll. Die Variation der Energiepreise je nach dem Zeitpunkt der Entnahme ist ein Mittel, diese günstige Auslastung des Versorgungsnetzes zu erreichen.

Bei einer weiteren Ausgestaltung werden von einem Server Zeitdaten zu Zeiträumen erfasst und diese Zeiträume bei der Erzeugung des Zeitplans priorisiert. Die oben beschriebene Eingabe von günstigen oder ungünstigen Zeiträumen zum Laden des Fahrzeugs wird auf diese Weise automatisiert. Beispielsweise zum Aufladen des Energiespeichers besonders geeignete Zeiträume können auf diese Weise automatisch von einem entfernten Rechner bereitgestellt werden. Die Optimierung des Ladevorgangs wird so vorteilhafterweise erleichtert. Die relevanten Zeitdaten können dabei drahtlos, etwa über ein Mobilfunknetz, an das Fahrzeug übertragen werden, ferner kann beispielsweise eine Ladeeinrichtung die entsprechenden Daten über eine Kabelverbindung bereitstellen.

Bei einer Weiterbildung der Erfindung umfassen die Graphikdaten ferner graphische Objekte zu Zeiträumen, die bei der Erzeugung des Zeitplans priorisiert werden. Der Benutzer kann die entsprechenden Zeiträume schnell und intuitiv erfassen und wird bei der Planung des Ladevorgangs unterstützt. Zum Beispiel wird so vorteilhafterweise für den Benutzer leicht erkennbar, zu welchen Zeiträumen der Ladevorgang vorzugsweise durchgeführt werden soll. Ändert der Benutzer einen der Parameter, zum Beispiel den geplanten Abfahrtszeitpunkt, so werden die Konsequenzen leicht erkennbar, wenn beispielsweise ein Zeitraum mit höherer Priorität nicht zum Laden der Batterie verwendet werden kann und die Kosten für das Aufladen höher sind. Die Zeiträume, die bei der Erzeugung des Zeitplans priorisiert werden, können manuell eingestellt oder automatisch erfasst werden, sie können allerdings auch fest voreingestellt sein.

Bei einer Ausbildung ist das übergreifende Graphikelement eine Darstellung des Zifferblatts einer Uhr. Diese Darstellung erlaubt es dem Benutzer, Zeitdaten intuitiv und schnell zu erfassen. Vorteilhafterweise wird dazu ein graphisches Element verwendet, das der allgemein verbreiteten und für den Benutzer gewohnten Darstellung von Uhrzeiten entspricht.

Bei einer Weiterbildung der Erfindung werden die Graphikdaten so angezeigt, dass sie graphische Objekte umfassen, die mehreren alternativen Zeitplänen zugeordnet sind. Dies können zum Beispiel mehrere Zeitpläne entsprechend verschiedenen Ladestromstärken sein. Das Laden der Batterie nimmt bei verschiedenen Stromstärken, die von der Ladeeinrichtung zur Verfügung gestellt werden, unterschiedlich lange Zeit in Anspruch. Ist das Fahrzeug beispielsweise gerade nicht mit einer Ladeeinrichtung verbunden, so muss der Benutzer beispielsweise bei der Auswahl der Ladeeinrichtung darauf achten, mit welchem Ladestrom der Ladevorgang zur geplanten Abfahrtszeit beendet ist. Zum Beispiel können verschiedene Ladedauern durch die Anzeige von verschieden langen Kreissegmenten dargestellt werden. Der Benutzer kann somit in vorteilhafter Weise schnell und intuitiv die Zeitpläne für verschiedene Alternativen erfassen und den am besten geeigneten auswählen.

Bei dem eingangs genannten System sind zumindest zwei Lademodi für den Energiespeicher definiert, nämlich ein Sofortlademodus, bei dem der Ladevorgang sofort nach dem Verbinden des Energiespeichers mit einer Ladeeinrichtung beginnt, und ein Programmlademodus, bei dem der Beginn des Ladevorgangs durch einen Zeitplan bestimmt wird. Es umfasst eine Erfassungseinheit, durch die Daten über einen Energieinhalt des Energiespeichers und einen von der Ladeeinrichtung bereitstellbaren Ladestrom erfassbar sind, und eine Eingabeeinheit, durch die Benutzereingaben zu dem automatischen Laden des elektrischen Energiespeichers erfassbar sind. Es umfasst ferner eine Recheneinheit, durch die anhand der erfassten Daten und der Benutzereingaben der Zeitplan zum automatischen Laden des Energiespeichers erzeugbar ist, durch die, wenn das Fahrzeug im Programmlademodus nicht mit einer Ladeeinrichtung verbunden ist, anhand des Energieinhalts, des bereitstellbaren Ladestroms und eines Endzeitpunkts des geplanten Ladevorgangs ein spätester Verbindungszeitpunkt bestimmbar ist, zu dem das Fahrzeug mit einer Ladeeinrichtung verbunden werden muss, um einen Zielladezustand bis zum geplanten Endzeitpunkt zu erreichen, und durch die ein Erinnerungszeitpunkt bestimmbar ist, der vor dem spätesten Verbindungszeitpunkt liegt, und eine Steuereinheit, durch die Graphikdaten mit graphischen Objekten erzeugbar sind. Dabei werden gleichzeitig graphische Objekte angezeigt, von denen ein erstes graphisches Objekt ein für alle Lademodi des Energiespeichers übergreifendes Graphikelement umfasst, welches eine Zeitskala darstellt und an dem weitere graphische Objekte angeordnet sind, die den Zeitdaten des Zeitplans zugeordnet sind, ein zweites graphisches Objekt einem Anfangs- und dem Endzeitpunkt des geplanten Ladevorgangs zugeordnet ist, ein drittes graphisches Objekt dem Ladestrom zugeordnet ist und ein viertes graphisches Objekt dem spätesten Verbindungszeitpunkt zugeordnet ist. Ferner umfasst das erfindungsgemäße System eine Anzeigeeinheit, durch welche die erzeugten Graphikdaten ausgebbar sind. Das erfindungsgemäße System ist insbesondere ausgebildet, das vorstehend beschriebene erfindungsgemäße Verfahren zu implementieren. Das System weist somit dieselben Vorteile auf wie erfindungsgemäße Verfahren.

Gemäß einer Ausgestaltung des erfindungsgemäßen Systems umfasst die Anzeigeeinheit eine mobile Nutzervorrichtung. Auf diese Weise kann in vorteilhafter Weise die graphische Darstellung des Zeitplans und der relevanten Parameter auf einer mobilen Nutzervorrichtung erfolgen. Eine solche mobile Nutzervorrichtung kann beispielsweise ein Mobiltelefon sein, ein elektronischer Terminplaner (PDA), ein Computer oder eine Uhr, die zur Ausgabe einer solchen Anzeige geeignet ist. Der Benutzer kann den Zeitplan auf diese Weise auch ausgeben, wenn er sich nicht im Fahrzeug befindet.

Die Erfindung wird nun anhand von Ausführungsbeispielen mit Bezug zu den Zeichnungen erläutert.
- Figur 1: zeigt schematisch ein Ausführungsbeispiel eines Systems zur Implementierung des erfindungsgemäßen Verfahrens,
- Figur 2: zeigt ein Ausführungsbeispiel einer Anzeige eines Zeitplans im Sofortlademodus,
- Figur 3: zeigt ein Ausführungsbeispiel einer Anzeige mehrerer alternativer Zeitpläne im Sofortlademodus,
- Figur 4: zeigt ein Ausführungsbeispiel einer Anzeige eines Zeitplans im Programmlademodus,
- Figur 5A: zeigt ein Ausführungsbeispiel einer Anzeige eines Zeitplans, wobei 24 Stunden auf einem Zifferblatt dargestellt werden,
- Figur 5B: zeigt ein Ausführungsbeispiel einer Anzeige eines Zeitplans, wobei Zeitdaten in einer Kalenderdarstellung dargestellt werden,
- Figur 5C: zeigt ein weiteres Ausführungsbeispiel einer Anzeige eines Zeitplans, wobei Zeitdaten in einer Kalenderdarstellung dargestellt werden,
- Figur 5D: zeigt ein Ausführungsbeispiel einer Anzeige eines Zeitplans, wobei 24 Stunden in einer linearen graphischen Darstellung dargestellt werden,
- Figur 6: zeigt ein Ausführungsbeispiel einer Anzeige eines Zeitplans mit Angabe der Reichweite des Fahrzeugs.

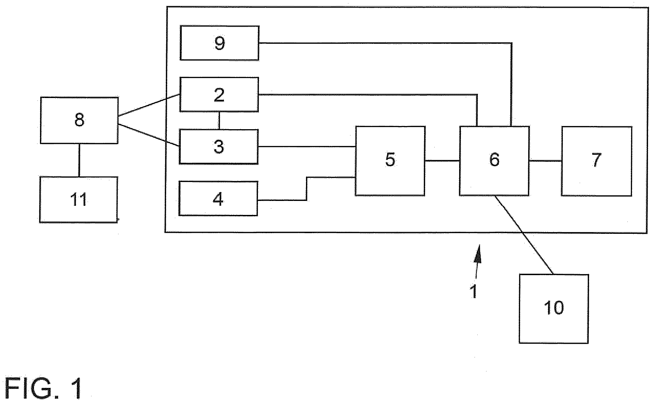

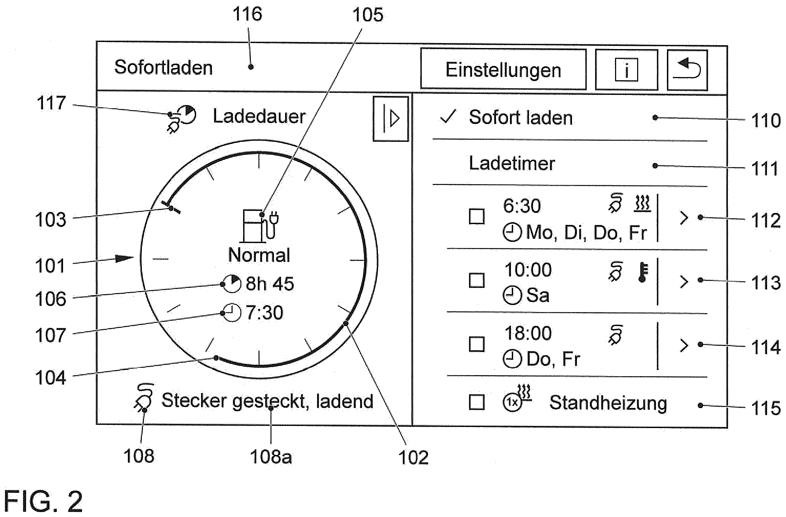

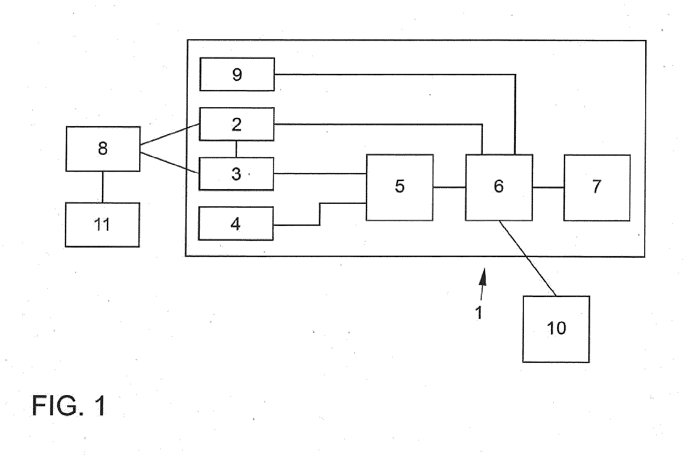

Mit Bezug zu den Fig. 1 und 2 wird ein Ausführungsbeispiel eines Systems zur Implementierung des erfindungsgemäßen Verfahrens erläutert.

Ein Fahrzeug 1 umfasst eine Batterie 2, die elektrische Energie speichert, und einen elektrischen Motor zum Antrieb des Fahrzeugs 1. Es umfasst ferner eine Erfassungseinheit 3, die dazu ausgebildet ist, den aktuellen Energieinhalt der Batterie 2 und die Temperatur im Fahrzeug 1 zu erfassen. Ferner umfasst das Fahrzeug 1 eine Eingabeeinheit 4, mittels derer Eingaben eines Benutzers erfasst werden. Zu diesen Eingaben gehören der geplante Abfahrtszeitpunkt 107 und der Ziel-Energieinhalt 123 der Batterie 2, sowie die gewünschte Temperatur 119 im Fahrzeug 1 zum geplanten Abfahrtszeitpunkt 107. Der Ziel-Energieinhalt 123 kann alternativ auch aus dem Ziel einer Route oder einer gewünschten Reichweite berechnet werden.
Eine außerhalb des Fahrzeugs 1 angeordnete Ladeeinrichtung 8 ist trennbar mit dem Fahrzeug 1 verbunden, insbesondere mit der Batterie 2 und der Erfassungseinheit 3. Die Ladeeinrichtung 8 stellt elektrische Energie zum Aufladen der Batterie 2 zur Verfügung. Die Erfassungseinheit 3 erfasst den von der Ladeeinrichtung 8 bereitgestellten Ladestrom, indem sie von der Ladeeinrichtung 8 Daten über die verfügbare Stromstärke, bzw. über verschiedene optional zur Verfügung stehende Stromstärken empfängt. Ferner misst die Erfassungseinrichtung 3 die Stärke des aktuell fließenden Stroms. Sie erfasst ferner Informationen von einem Navigationssystem des Fahrzeugs 1 darüber, welche Stromstärke von einer Ladeeinrichtung 8 am Zielort der gegenwärtigen Route voraussichtlich bereitstellbar sein wird. Andererseits detektiert die Erfassungseinheit 3 auch, ob die Batterie 2 mit einer Ladeeinrichtung 8 verbunden ist oder nicht. Die Ladeeinrichtung 8 wiederum ist datentechnisch mit dem Server 11 gekoppelt und ruft von diesem Daten insbesondere darüber ab, in welchen Zeiträumen 120 die Entnahme elektrischer Energie aus dem Versorgungsnetz zu welchen Preisen möglich ist. Diese Daten werden ebenfalls an die Erfassungseinheit 3 übertragen und stehen zur Verfügung, um kostengünstige Zeiträume 120 zum Aufladen priorisieren zu können.

Für die Batterie 2 sind zwei Lademodi definiert: Im Sofortlademodus beginnt der Ladevorgang, sobald die Batterie 2 mit der Ladeeinrichtung 8 verbunden ist. Im Programmlademodus wird der Ladevorgang anhand eines Zeitplans gesteuert. Der Lademodus der Batterie 2 wird durch eine Benutzereingabe mittels der Eingabeeinheit 4 vorgegeben. Die Erfassungseinheit 3 und die Eingabeeinheit 4 verfügen über Schnittstellen zur Übertragung der erfassten Daten an eine Recheneinheit 5, die anhand der erfassten Daten einen Zeitplan zum Aufladen der Batterie 2 erzeugt und diesen an eine Steuereinheit 6 des Fahrzeugs 1 überträgt.

Die Steuereinheit 6 verfügt über Schnittstellen zu einer Klimatisierungseinheit 9 und der Batterie 2, um die Ausführung des Zeitplans, d.h. das Aufladen der Batterie 2 und das Klimatisieren des Fahrzeugs 1, zu steuern. Dazu erzeugt die Steuereinheit 6 Signale und überträgt sie an die anderen Einrichtungen des Fahrzeugs 1 derart, dass die im Zeitplan vorgesehenen Prozesse korrekt ausgeführt werden. Zur Ausgabe des Zeitplans erzeugt die Steuereinheit 6 Graphikdaten mit graphischen Objekten, welche die Daten des Zeitplans darstellen. Zu diesen Daten gehören beispielsweise der Ladezeitraum 102, das Ladestromsymbol 105 und der Klimatisierungszeitraum 118. Die Graphikdaten werden über eine Schnittstelle an eine Anzeigeeinheit 7 übertragen und dort ausgegeben. Im dargestellten Fall ist die Anzeigeeinheit 7 ein Display 7 an der Mittelkonsole des Fahrzeugs 1. Allerdings können die Graphikdaten auch im Kombiinstrument des Fahrzeugs 1 ausgegeben werden. Außerdem ist eine mobile Nutzervorrichtung 10, im beschriebenen Beispiel ein Mobiltelefon 10, datentechnisch mit der Steuereinheit 6 gekoppelt. Das Mobiltelefon 10 empfängt die Graphikdaten von der Steuereinheit 6 und gibt sie aus.
Nachfolgend wird die Ausführung des erfindungsgemäßen Verfahrens durch das in Fig. 1 dargestellte System erläutert.

Das erfindungsgemäße Verfahren dient dazu, einen Zeitplan zum automatischen Laden der Batterie 2 des Fahrzeugs 1 zu erzeugen und auszugeben. Der Zeitplan legt unter anderem den Beginn 103 und das Ende 104 des geplanten Ladevorgangs fest. Mittels der Erfassungseinheit 4 wird der aktuelle Energieinhalt der Batterie 2 erfasst. Ferner werden Benutzervorgaben erfasst, insbesondere der Lademodus, die geplante Abfahrtszeit 107, der Ziel-Energieinhalt 123, die gewünschte Temperatur 119 und das Wiederholungsintervall 121 für den programmierten Zeitplan.

Ist der Sofortlademodus aktiv, so entspricht der Ladebeginn 103 dem Zeitpunkt, zu dem die Batterie 2 mit der Ladeinrichtung 8 verbunden wird. Das Ende 104 des Ladevorgangs wird dann anhand der erfassten Daten berechnet, insbesondere anhand des zur Verfügung stehenden Ladestroms 105 und des aktuellen und Ziel-Energieinhalts 123.

Im Programmlademodus wird der Zeitplan anhand der erfassten Daten vorausgeplant, wobei der Ladebeginn 103 vom System berechnet wird und nicht notwendigerweise mit dem Zeitpunkt des Verbindens mit der Ladeeinrichtung 8 übereinstimmt. Die Parameter zur Erstellung des Zeitplans sind in diesem Falle insbesondere die geplante Abfahrtszeit 107, der Ziel-Energieinhalt 123 und einer oder mehrere Zeiträume 120 für die kostengünstige Entnahme elektrischer Energie.

Auf Grundlage der von der Erfassungseinheit 3 und der Eingabeeinheit 4 erfassten Daten erzeugt die Recheneinheit 5 den Zeitplan zum Laden der Batterie 2 und zum Klimatisieren des Fahrzeugs 1. Bei der Erzeugung des Zeitplans wird insbesondere berücksichtigt, zu welchem Abfahrtszeitpunkt die Batterie 2 welchen Ziel-Energieinhalt 123 erreicht haben soll. Ferner werden Zeiträume entsprechend den vom Server 11 abgerufenen Energiekosten priorisiert, um das Aufladen möglichst kostengünstig zu gestalten. Die Erstellung des Zeitplans ist also eine Optimierungsaufgabe, bei der die beste Variante aus einer Vielzahl möglicher Zeitpläne ausgewählt wird.

Der Zeitplan umfasst insbesondere einen Startzeitpunkt 103, zu dem der Ladevorgang beginnen soll, sowie einen Endzeitpunkt 104, zu dem der Ladevorgang voraussichtlich endet. Vor dem geplanten Startzeitpunkt 103, zu dem der Ladevorgang beginnen muss, um den gewünschten Ziel-Energieinhalt 123 der Batterie 2 bis zum Abfahrtszeitpunkt 107 zu erreichen, ist ein Erinnerungszeitpunkt 122 definiert. Zur Berechnung des Erinnerungszeitpunkts 122 wird anhand des aktuellen Energieinhalts der Batterie 2, des zu erreichenden Energieinhalts 123 und des zur Verfügung stehenden Ladestroms 105 die voraussichtliche Ladedauer 106 berechnet. Zusammen mit dem gewünschten Abfahrtszeitpunkt 107 ergibt sich so ein spätester Verbindungszeitpunkt, bei dem das Fahrzeug 1 mit der Ladeeinrichtung 8 verbunden werden muss, um den gewünschten Energieinhalt 123 bis zum Abfahrtszeitpunkt 107 zu erreichen. Dieser spätestes Verbindungszeitpunkt kann auch in der Anzeige dargestellt werden. Der Erinnerungszeitpunkt 122 wird dann eine bestimmte Zeitspanne vor dem spätesten Verbindungszeitpunkt definiert. Zum Erinnerungszeitpunkt 122 wird eine Erinnerungsmeldung ausgegeben, die den Benutzer auffordert, die Batterie 2 mit der Ladestation 8 zu verbinden. Die Ausgabe der Meldung erfolgt mittels der Anzeigeeinheit 7 und des Mobiltelefons 10. Dabei wird im beschriebenen Fall auch der späteste Verbindungszeitpunkt mitgeteilt, das heißt, der Benutzer erfährt rechtzeitig vorher, zu bis zu welchem Zeitpunkt er die Batterie 2 spätestens mit der Ladeeinrichtung 8 verbinden muss. Im gezeigten Ausführungsbeispiel wird eine "Push-Mitteilung" an das Telefon gesendet und dem Benutzer direkt angezeigt. In anderen Ausführungen wird eine Kurzmitteilung an das Telefon gesendet oder eine Erinnerung mittels eines spezialisierten Programms, einer sogenannten "App", ausgegeben.

Der Zeitplan wird an die Steuereinheit 6 übertragen. Diese hat zwei Funktionen: Einerseits steuert sie die Ausführung des erzeugten Zeitplans, indem sie zur richtigen Zeit geeignete Signale zum Aufladen an die Batterie 2 und zum Klimatisieren des Fahrzeugs 1 an die Klimatisierungseinheit 9 überträgt. Andererseits erzeugt sie Graphikdaten zur Ausgabe des Zeitplans und überträgt diese an die Anzeigeeinheit 7 und das Mobiltelefon 10, wo sie für den Benutzer dargestellt werden.

Die Graphikdaten umfassen graphische Objekte, wobei insbesondere drei graphische Objekte gleichzeitig angezeigt werden: Ein graphisches Objekt umfasst ein übergreifendes Graphikelement 101, das eine Zeitskala darstellt und an dem weitere graphische Objekte angeordnet sind, die den Zeitdaten zugeordnet sind. Ferner ein dem Ladezeitraum zugeordnetes graphisches Objekt 102 sowie ein Symbol 105 für den Ladestrom. Im Ausführungsbeispiel wird der Ladezeitraum durch ein Kreissegment 102 dargestellt, durch das auch der Beginn 103 und das Ende 104 des Ladezeitraums ablesbar sind. Das übergreifende Graphikelement 101 ist in diesem Ausführungsbeispiel eine Darstellung eines Zifferblatts 101. Dieses Zifferblatt wird "übergreifend" für alle Lademodi des Energiespeichers 2 in ähnlicher, wiedererkennbarer Form angezeigt und die jeweils relevanten Zeitdaten sind an ihm angeordnet.

Erkennt die Recheneinheit 5 bei der Erstellung des Zeitplans, dass mit den vorgegebenen Planungsparametern der Ziel-Energieinhalt 123 der Batterie 2 nicht zum gewünschten Abfahrtszeitpunkt 107 zu erreichen ist, dann umfassen die erzeugten Graphikdaten eine Warnmeldung, die den Fahrer auf den bestehenden Konflikt und gegebenenfalls auf Lösungsmöglichkeiten hinweist. Erfolgt etwa die Verbindung des Fahrzeugs 1 mit der Ladeeinrichtung 8 zu spät, so umfassen die Graphikdaten eine Angabe des unter den gegebenen Umständen voraussichtlich erreichbaren Energieinhalts und der daraus resultierenden Reichweite des Fahrzeugs 1 zum geplanten Abfahrtszeitpunkt 107. Ferner enthalten die Graphikdaten Hinweise auf Alternativen um den Konflikt zu beheben, etwa durch Wahl einer Ladestation 8 mit höherem Ladestrom, einen späteren Abfahrtszeitpunkt 107 oder einen früheren Verbindungszeitpunkt.

In einem weiteren Ausführungsbeispiel umfasst die Anzeigeeinheit 7 eine Anzeige mit einer berührungsempfindlichen Oberfläche, die wiederum der Eingabeeinheit 4 zugeordnet ist. Die Anzeigeeinheit 7 und die Eingabeeinheit 4 sind also in einem Gerät kombiniert. Insbesondere handelt es sich um einen Touchscreen, mit dem der Benutzer Eingaben direkt auf der Anzeige ausführt. Die graphische Darstellung der Parameter zur Erzeugung des Zeitplans ist in diesem Fall eine graphische Benutzeroberfläche, die eine einfache und intuitive Bedienung durch den Benutzer ermöglicht. Analog dazu umfasst in diesem Beispiel auch das Mobiltelefon 10 eine berührungsempfindliche Oberfläche, mittels derer Eingaben erfasst werde. Das Mobiltelefon 10 überträgt die derart erfassten Daten an das Fahrzeug 1.

Mit Bezug zu Fig. 2 wird ein Ausführungsbeispiel einer Anzeige eines Zeitplans im Sofortlademodus erläutert.

Die dargestellte Anzeige wird von dem in Fig. 1 gezeigten System von der Steuereinheit 6 erzeugt und von der Ausgabeeinheit 7 des Fahrzeugs 1 ausgegeben. Die Ausgabe der Graphikdaten dient insbesondere der vom Benutzer intuitiv und schnell erfassbaren Darstellung der für die Zeitplanung relevanten Planungsparameter, sowie des resultierenden Zeitplans zum Aufladen und Klimatisieren des Fahrzeugs 1. Die Graphikdaten werden daher so erzeugt, dass eine in diesem Sinne besonders vorteilhafte Darstellung erreicht wird.

Anhand der Anzeige einer Sofortladeoption 110 und einer Programmladeoption 111 ist erkennbar, in welchem Lademodus die Batterie 2 befindet. In diesem Fall ist die Sofortladeoption 110 markiert und die Batterie 2 ist im Sofortlademodus. Diese Information wird auch im Feld der Lademodusanzeige 116 mittels eines entsprechenden Schriftzugs dargestellt. Durch die Anzeige mehrerer programmierter Ladevorgänge 112 bis 114, von denen derzeit keiner aktiviert ist, können verschiedene programmierte Optionen unterschieden und für den Benutzer auf einen Blick erfassbar dargestellt werden. Selbiges gilt für den programmierten Klimatisierungsvorgang 115.

Bei dem dargestellten Ausführungsbeispiel befindet sich die Batterie 2 im Sofortlademodus, das heißt, der Ladevorgang beginnt, sobald die Batterie 2 mit der Ladestation 8 verbunden wird. Dies wird durch die Lademodusanzeige 116 signalisiert. Im gezeigten Fall ist die Ladestation 8 bereits angeschlossen, was durch die Anzeige des Verbindungsstatus als Symbol 108 und Beschriftung 108a dargestellt wird. Der Startzeitpunkt 103 ist also die aktuelle Uhrzeit. Die Anzeige enthält das übergreifende Graphikelement 101, insbesondere das Zifferblatt 101 einer Uhr. Das Zifferblatt 101 umfasst einen Kreis und, in gleichmäßigen Abständen daran angeordnet, zwölf Markierungen in radialer Richtung. Der Ladezeitraum 102 ist als Kreissegment dargestellt, das parallel zum Rand des Zifferblatts 101 vom Startzeitpunkt 103 bis zum Endzeitpunkt 104 verläuft. Der Startzeitpunkt 103 ist zusätzlich durch eine Linie in radialer Richtung markiert. Im gezeigten Anzeigemodus, kenntlich gemacht mittels des Schriftzugs "Ladedauer" und des dem Anzeigemodus zugeordneten Symbols 117, wird die Dauer des Ladevorgangs angezeigt. In anderen Anzeigemodi werden beispielsweise gesondert programmierte Zeitpläne für die Klimatisierung des Fahrzeugs 1 dargestellt.

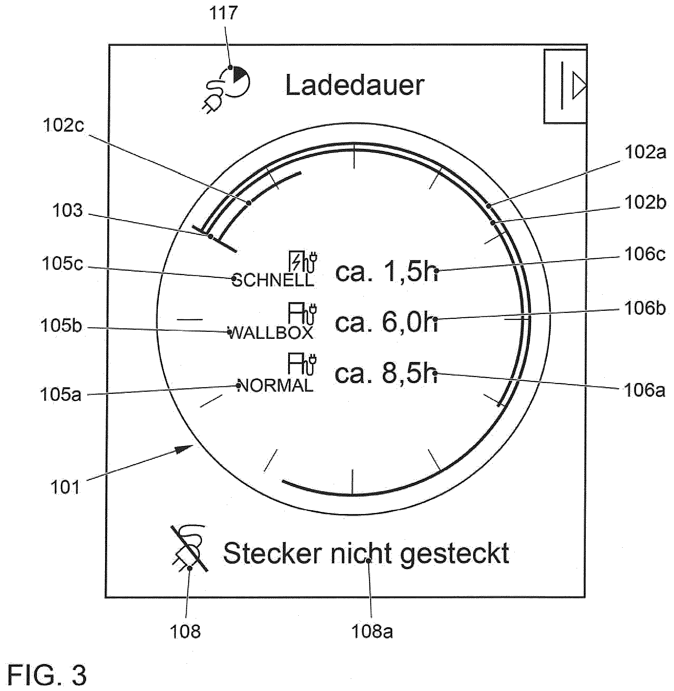

Der zur Verfügung stehende Ladestrom wird im mittleren Bereich des Zifferblatts 101 durch das Ladestromsymbol 105 dargestellt. Dabei werden verschiedene Ladeströme durch verschiedene Ladestromsymbole 105 dargestellt (siehe dazu Fig. 3). Im gezeigten Fall steht der Ladestrom "normal" zur Verfügung, wobei die an einer "normalen" Ladestation verfügbare Stromstärke durch das Versorgungsnetz definiert ist. Der zur Verfügung stehende Ladestrom hängt von der Ladestation 8 ab: Eine Ladestation 8 kann unterschiedliche Ladestromstärken zur Verfügung stellen, allerdings ist die Auswahl der Ladestromstärke durch die Eigenschaften der Ladestation 8 beschränkt. Ferner werden die Ladedauer 106 und der nächste geplante Abfahrtszeitpunkt 107 als Ziffern mittig auf dem Zifferblatt 101 dargestellt. Der Verbindungsstatus wird mittels eines Symbols 108 und einer dem Symbol 108 zugeordneten Beschriftung 108a angezeigt. Die Batterie 2 ist aktuell an eine Ladestation 8 angeschlossen und führt derzeit einen Ladevorgang aus.

Mit Bezug zu Fig. 3 wird ein Ausführungsbeispiel einer Anzeige mehrerer alternativer Zeitpläne im Sofortlademodus erläutert.

Die dargestellte Anzeige wird von dem in Fig. 1 gezeigten System erzeugt und von der Ausgabeeinheit 7 des Fahrzeugs 1 ausgegeben. Insbesondere entspricht Fig. 3 einem Ausschnitt aus der gesamten Anzeige, der auf das für die verschiedenen Lademodi übergreifende graphische Element, nämlich das Zifferblatt 101, reduziert ist. Diese Anzeige dient dazu, dem Benutzer zu signalisieren, wie das Aufladen mit verschiedenen Ladestromstärken geplant wird, insbesondere wie die Ladedauer bzw. der entsprechende Ladezeitraum von der Stromstärke abhängt. Der Benutzer erhält auf diese Weise eine Darstellung, die in einfacher Weise zeigt, wann das Aufladen der Batterie 2 bei verschiedenen Stromstärken abgeschlossen sein wird.

Der Anzeigemodus 117 wird kenntlich gemacht mittels eines Schriftzugs "Ladedauer" und eines dem Anzeigemodus 117 zugeordneten Symbols. Die Anzeige ist also im vorliegenden Fall so gestaltet, dass der Benutzer die Ladedauer leicht erfassen kann. Die Batterie 2 des Fahrzeugs 1 ist im gezeigten Fall nicht mit einer Ladestation 8 verbunden. Dieser Verbindungsstatus wird durch das Symbol 108 und die entsprechende Beschriftung 108a ("Stecker nicht gesteckt") dargestellt. Die Batterie 2 ist hier im Sofortlademodus, das heißt, der Ladevorgang beginnt, sobald die Batterie 2 mit der Ladestation 8 verbunden wird. Dieser Startzeitpunkt 103 entspricht im vorliegenden Fall dem aktuellen Zeitpunkt.

Da der Benutzer beim Verbinden mit der Ladestation 8 die Wahl hat zwischen verschiedenen Ladeströmen, werden in der in Fig. 3 dargestellten Anzeige die Ladezeiträume 102a bis 102c für verschiedene drei Ladeströme angezeigt. Der Benutzer entnimmt also direkt aus der Anzeige, wann ein Ladevorgang bei einem der dargestellten Ladeströme abgeschlossen sein wird. Mittig auf dem Zifferblatt 101 sind die drei alternativen Ladeströme mit Symbolen 105 a bis 105 c dargestellt, ferner sind die abgeschätzten Ladedauern 106a bis 106c beim jeweiligen Ladestrom dargestellt. Der zur Verfügung stehende Ladestrom ist dabei durch verschiedene Gegebenheiten bestimmt: Das Fahrzeug 1 kann an eine Ladeeinrichtung 8 angeschlossen werden, an der verschiedene Stromstärken zum Aufladen ausgewählt werden können, oder es stehen verschiedene Ladeeinrichtungen 8 mit unterschiedlicher Stromstärke zur Auswahl. Die in Fig. 3 dargestellte Anzeige erlaubt dem Benutzer einen schnellen Überblick darüber, wie lange der Ladevorgang bei verschiedenen Ladestromstärken dauern wird.

Der Startzeitpunkt 103 ist durch eine Markierung auf dem Zifferblatt 101 dargestellt, ausgehend davon sind die Ladezeiträume 102a bis 102c als Kreissegmente dargestellt, die parallel zum Rand des Zifferblatts 101 verlaufen und vom Startzeitpunkt 103 ausgehen. Die Endzeitpunkte sind hier die jeweiligen Enden der Kreissegmente 102a bis 102c.

In einem weiteren Ausführungsbeispiel erfasst das System über das Navigationssystem des Fahrzeugs 1 die voraussichtliche Ankunftszeit an einer Ladestation und plant das Aufladen ab diesem geplanten Startzeitpunkt 103. Das Navigationssystem stellt in diesem Fall Informationen darüber bereit, welche Ladestromstärken am Zielort verfügbar sind, und die Anzeige der Ladezeiträume 102a bis 102c, bzw. des dargestellten Ladestroms 105a bis 105c und der berechneten Ladedauern 106a bis 106c entspricht diesen Informationen.

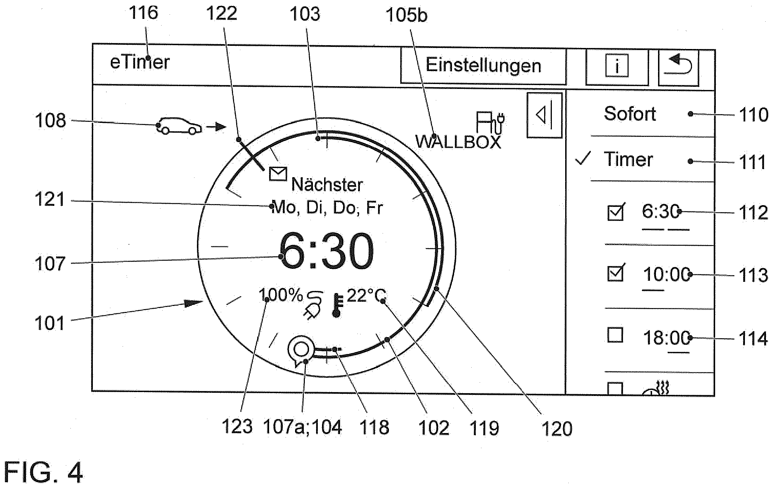

Mit Bezug zu Fig. 4 wird ein Ausführungsbeispiel einer Anzeige eines Zeitplans im Programmlademodus erläutert.

Die dargestellte Anzeige wird von dem in Fig. 1 gezeigten System erzeugt und von der Ausgabeeinheit 7 des Fahrzeugs 1 ausgegeben. Die Anzeige dient insbesondere dazu, dem Benutzer die Parameter eines programmierten Auflade- und Klimatisierungsvorgangs intuitiv und schnell erfassbar darzustellen.

Die Lademodusanzeige 116 zeigt mit dem Schriftzug "eTimer" an, dass die Batterie 2 im Programmlademodus ist. Ferner ist dies erkennbar an der mit einem Haken markierten Programmladeoption 111. Weiterhin werden die aktiven Programme 112 und 113 angezeigt, wobei die aktiven Programme mit einem Feld und einem Haken kenntlich gemacht sind. Das Programm 114 ist nicht aktiv und das zugehörige Feld ist nicht durch einen Haken markiert.

Alternativ oder zusätzlich kann ein nicht aktives Programm "ausgegraut", das heißt mit geringerer Helligkeit, dargestellt werden. Der aktuell angezeigte programmierte Zeitplan wird jeden Montag, Dienstag, Donnerstag und Freitag wiederholt, was im Feld des Wiederholungsintervalls 121 auf dem Ziffernblatt 101 angezeigt wird. Ferner wird hier angezeigt, welchen Energieinhalt 123 die Batterie 2 zur geplanten Abfahrtszeit 107 erreichen soll; im dargestellten Fall wird angezeigt, dass ein Energieinhalt von 100% erreicht werden soll.

Die Batterie 2 ist im gezeigten Fall nicht mit der Ladestation 8 verbunden, was durch das Symbol 108 für den Verbindungsstatus, hier die graphische Darstellung eines fahrenden Fahrzeugs, angezeigt wird. Die Zeitdaten des Zeitplans zum Laden der Batterie 2 werden, wie in den oben erläuterten Ausführungsbeispielen, an dem Zifferblatt 101 als übergreifendem Graphikelement dargestellt. Der Ladezeitraum 102 ist mittels eines Kreissegments parallel zum Rand des Zifferblatts 101 dargestellt. Ferner wird ein Nachtstromzeitraum 120 entlang dem Rand des Zifferblatts 101 angezeigt, in dem die Entnahme elektrischer Energie aus dem Versorgungsnetz kostengünstiger erfolgt. In einer weiteren Ausführung werden gleichzeitig mehrere Nachtstromzeiträume 120 als weitere Kreissegmente angezeigt, wenn die Energiekosten in mehr als einem Zeitraum variieren.

Der dargestellte Zeitplan wurde unter der Voraussetzung erzeugt, dass es sich bei der Ladestation 8 um die "Wallbox" mit entsprechender Stromstärke handelt. Dies wird durch das entsprechende Symbol 105b angezeigt. Der geplante Abfahrtszeitpunkt 107 wird mittig auf dem Zifferblatt 101 angezeigt und ist als graphisches Symbol 107a am Rand des Zifferblatts 101 dargestellt. Er stimmt im Falle des dargestellten Zeitplans mit dem Endzeitpunkt 104 überein, bei dem der Ladevorgang abgeschlossen ist. Der Erinnerungszeitpunkt 122, zu dem der Benutzer an das rechtzeitige Verbinden des Fahrzeugs 1 mit der Ladeeinrichtung 8 erinnert wird, wird am Rand des Zifferblatts 101 markiert und ein entsprechendes graphisches Symbol, hier ein Briefumschlag, wird an dieser Stelle angezeigt.

Ein weiterer Teil des Zeitplans ist die Klimatisierung des Fahrzeugs 1: Das Fahrzeug 1 soll zum Abfahrtszeitpunkt 107 eine vorgegebene Temperatur erreichen. Auf dem Zifferblatt 101 wird mittels eines Symbols und einer Schrift der Klimatisierungsstatus 119 angezeigt, das heißt der Benutzer kann erkennen, dass die Klimatisierung aktiv ist und dass das Fahrzeug auf 22°C gebracht werden soll. Dazu wird mittels der Steuereinrichtung 6 die Klimatisierungseinheit 9 im Klimatisierungszeitraum 118 aktiviert.

In einem weiteren Ausführungsbeispiel umfasst die Anzeige ferner die aktuelle Temperatur im Fahrzeug 1 und außerhalb des Fahrzeugs 1. Diese Daten werden auch auf das Mobiltelefon 10 übertragen, sodass der Benutzer überprüfen kann, ob die gewünschte Temperatur im Fahrzeug 1 erreicht ist, selbst wenn er sich außerhalb des Fahrzeugs 1 befindet.

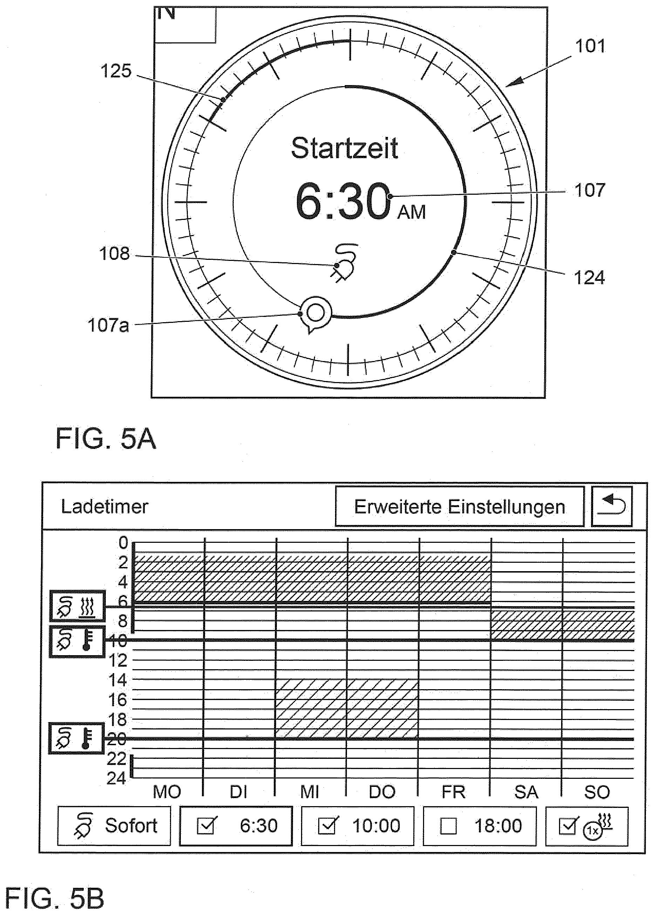

Mit Bezug zu Fig. 5A bis Fig. 5D werden Ausführungsbeispiele von Anzeigen mit alternativen übergreifenden Graphikelementen erläutert. Die genannten Zeichnungen stellen verschiedene Arten dar, wie insbesondere das übergreifende graphische Element 101 zur Anzeige der Zeitdaten ausgeprägt sein kann.

Figur 5A zeigt ein Ausführungsbeispiel einer Anzeige eines Zeitplans, wobei 24 Stunden auf einem einzigen runden Zifferblatt 101 dargestellt werden. Hierbei werden Zeitdaten am Vormittag, d.h. zwischen 0 Uhr und 12 Uhr, an einem inneren Ring 124 angezeigt, während Zeitdaten am Nachmittag, d.h. zwischen 12 Uhr und 24 Uhr, an einem äußeren Ring 125 angezeigt werden. Die Darstellung kann auch umgekehrt so erfolgen, dass Zeitdaten am Vormittag am äußeren Ring 125 und Zeiten am Nachmittag am inneren Ring 124 dargestellt werden. Mittig wird der geplante Abfahrtszeitpunkt 107 angezeigt, der auch als graphisches Symbol 107a dargestellt wird. Ebenfalls mittig zeigt ein Symbol 108 den Verbindungsstatus an, in diesem Fall ist das Fahrzeug 1 mit der Ladeeinrichtung 8 verbunden. In dieser Darstellung sind Zeiträume intuitiv erfassbar und eindeutig darstellbar, insbesondere wenn sie über 12 Uhr bzw. über 24 Uhr überschreiten.

Figur 5B zeigt ein Ausführungsbeispiel einer Anzeige eines Zeitplans, wobei Zeitdaten in einer Kalenderdarstellung dargestellt werden. Die Darstellung orientiert sich an der vertrauten tabellarischen Darstellung von Daten in Terminplanern. Einzelnen Tagen wird dabei eine Spalte zugewiesen, deren Länge 24 Stunden entspricht. Zeitdaten sind entlang der Länge der jeweiligen Spalte angezeigt. In durch den Zeitplan bestimmten Zeiträumen werden die entsprechenden geplanten Vorgänge, in diesem Fall Aufladen und Klimatisieren, mit unterschiedlicher Helligkeit oder Farbe in der tabellarischen Darstellung markiert.

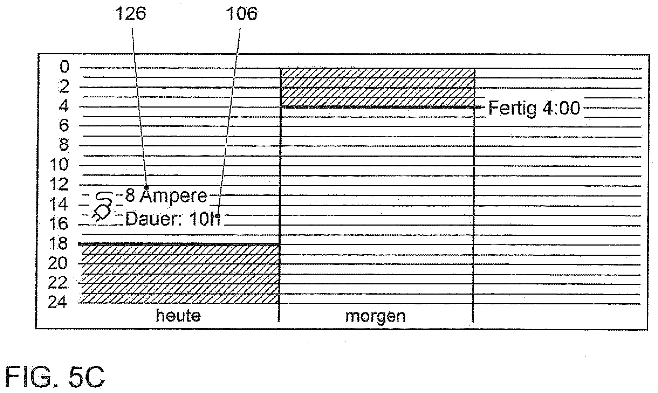

Figur 5C zeigt ein weiteres Ausführungsbeispiel einer Anzeige eines Zeitplans, wobei Zeitdaten in einer Kalenderdarstellung dargestellt werden. Diese Darstellung ist eine Abwandlung der in Fig. 5B dargestellten Terminplanansicht, allerdings reduziert auf drei Tage, in diesem Fall den aktuellen Tag und die beiden folgenden Tage. Ladestrom 126 und Ladedauer 106 sind ebenfalls in der Darstellung enthalten.

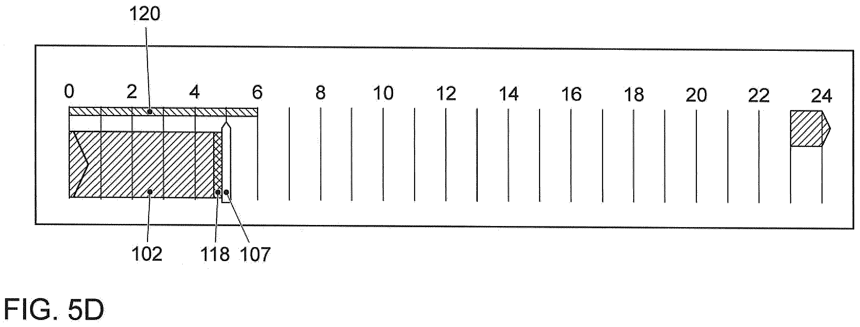

Figur 5D zeigt ein Ausführungsbeispiel einer Anzeige eines Zeitplans, wobei 24 Stunden in einer linearen graphischen Darstellung dargestellt werden. In diesem Beispiel wird die zeitliche Dimension in der Horizontalen dargestellt. Verschiedene geplante Vorgänge werden durch Helligkeit und Farbe entlang der Zeitachse dargestellt. Im dargestellten Fall wird ein geplanter Abfahrtszeitpunkt 107 dargestellt, ferner Zeiträume zum Aufladen 102 der Batterie 2 und zum Klimatisieren 118 des Fahrzeugs 1, sowie der Nachtstromzeitraum 120.

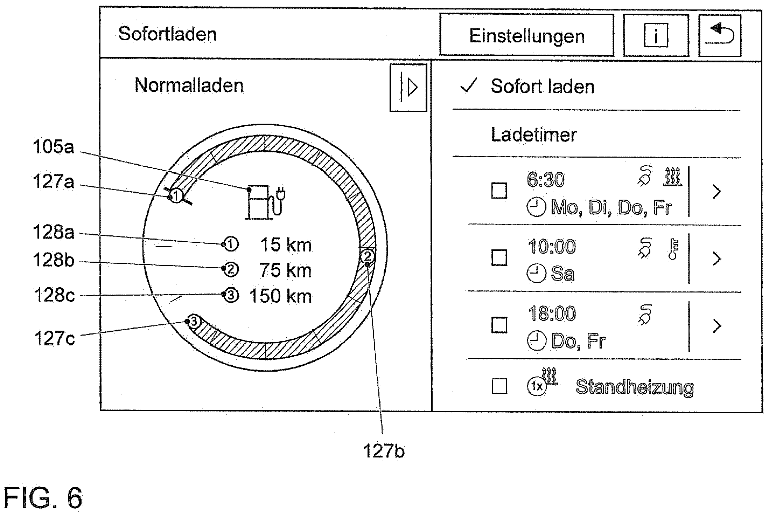

Mit Bezug zu Fig. 6 wird ein Ausführungsbeispiel einer Anzeige eines Zeitplans mit Angabe der Reichweite des Fahrzeugs erläutert.

Die Reichweite des Fahrzeugs 1 hängt vom Energieinhalt der Batterie 2 ab. Während des Ladevorgangs wächst somit auch die momentane Reichweite des Fahrzeugs. In der dargestellten graphischen Anzeige wird mittels des Ladestromsymbols 105a angezeigt, dass das Fahrzeug mit der Ladeeinrichtung 8 verbunden ist, die einen bestimmten Ladestrom zur Verfügung stellt. Der geplante Ladevorgang ist als Kreissegment dargestellt. Zeitpunkte 127a, 127b und 127c an diesem Kreissegment markieren diejenigen Zeiten, zu denen die Reichweite des Fahrzeugs 1 berechnet wird. Im Bereich der Reichweitenanzeige 128a bis 128c werden für die Zeitpunkte 127a, 127b und 127c Werte angezeigt, die der jeweiligen Reichweite des Fahrzeugs 1 entsprechen. Die Zeitpunkte 127a bis 127c können je nach Anwendung angepasst werden, es können auch mehr oder weniger Zeitpunkte berücksichtigt werden.

### Bezugszeichenliste

- 1: Fahrzeug
- 2: Energiespeicher
- 3: Erfassungseinheit
- 4: Eingabeeinheit
- 5: Recheneinheit
- 6: Steuereinheit
- 7: Anzeigeeinheit
- 8: Ladeeinrichtung
- 9: Klimatisierungseinheit
- 10: Mobile Nutzervorrichtung
- 11: Server
- 101: Zifferblatt
- 102: Ladezeitraum
- 102a: Ladezeitraum "normal"
- 102b: Ladezeitraum "Wallbox"
- 102c: Ladezeitraum "schnell"
- 103: Startzeitpunkt
- 104: Endzeitpunkt
- 105; 105a: Ladestromsymbol "normal"
- 105b: Ladestromsymbol "Wallbox"
- 105c: Ladstromsymbol "schnell"
- 106; 106a: Ladedauer "normal"
- 106b: Ladedauer "Wallbox"
- 106c;: Ladedauer "schnell"
- 107: Abfahrtszeitpunkt
- 107a: Abfahrtszeitraum (Symbol)
- 108: Verbindungsstatus (Symbol)
- 108a: Verbindungsstatus (Beschriftung)
- 110: Sofortladeoption
- 111: Programmladeoption
- 112; 113; 114: Programmierte Ladevorgänge
- 115: Programmierter Klimatisierungsvorgang
- 116: Lademodusanzeige
- 117: Anzeigemodus
- 118: Klimatisierungszeitraum
- 119: Klimatisierungsstatus
- 120: Nachtstromzeitraum
- 121: Wiederholungsintervall
- 122: Erinnerungszeitpunkt
- 123: Ziel-Energieinhalt
- 124: Innerer Ring
- 125: Äußerer Ring
- 126: Ladestrom
- 127a; 127b; 127c: Zeitpunkte für Reichweite
- 128a; 128b; 128c: Reichweitenanzeige

## Patentansprüche

1. Verfahren zur Erzeugung und Ausgabe eines Zeitplans zum automatischen Laden eines elektrischen Energiespeichers (2) in einem Fahrzeug (1), bei dem
zumindest zwei Lademodi (110, 111) für den Energiespeicher (2) definiert sind, nämlich ein Sofortlademodus (110), bei dem der Ladevorgang sofort nach dem Verbinden des Energiespeichers (2) mit einer Ladeeinrichtung (8) beginnt, und ein Programmlademodus (111), bei dem der Beginn (103) des Ladevorgangs durch den Zeitplan bestimmt wird,
Daten über einen Energieinhalt des Energiespeichers (2) und einen von der Ladeeinrichtung (8) bereitstellbaren Ladestrom erfasst werden,
Benutzereingaben zu dem automatischen Laden des elektrischen Energiespeichers (2) erfasst werden,
anhand der erfassten Daten und der Benutzereingaben der Zeitplan zum automatischen Laden des Energiespeichers (2) erzeugt wird,
wenn das Fahrzeug (1) im Programmlademodus nicht mit einer Ladeeinrichtung (8) verbunden ist, anhand des Energieinhalts, des bereitstellbaren Ladestroms und eines Endzeitpunkts (104) des geplanten Ladevorgangs ein spätester Verbindungszeitpunkt bestimmt wird, zu dem das Fahrzeug (1) mit einer Ladeeinrichtung (8) verbunden werden muss, um einen Zielladezustand (123) bis zum geplanten Endzeitpunkt (104) zu erreichen,
ein Erinnerungszeitpunkt (122) bestimmt wird, der vor dem spätesten Verbindungszeitpunkt liegt, und eine Erinnerungsmeldung ausgegeben wird, wenn bei Erreichen des Erinnerungszeitpunkts (122) das Fahrzeug (1) nicht mit einer Ladeeinrichtung (8) verbunden ist, und
anhand des Zeitplans Graphikdaten mit mehreren graphischen Objekten erzeugt und gleichzeitig angezeigt werden, wobei ein erstes graphisches Objekt ein für alle Lademodi (110, 111) des Energiespeichers (2) übergreifendes Graphikelement (101) umfasst, welches eine Zeitskala darstellt und an dem weitere graphische Objekte angeordnet sind, die den Zeitdaten des Zeitplans zugeordnet sind, ein zweites graphisches Objekt (102) einem Anfangs- (103) und dem Endzeitpunkt (104) des geplanten Ladevorgangs zugeordnet ist, ein drittes graphisches Objekt (105, 105a, 105b, 105c) dem Ladestrom zugeordnet ist und ein viertes graphisches Objekt dem spätesten Verbindungszeitpunkt zugeordnet ist.

2. Verfahren nach Anspruch 1,
**dadurch gekennzeichnet, dass**
die Graphikdaten im Programmlademodus ferner graphische Objekte (121) zur Wiederholung des programmierten Zeitplans umfassen.

3. Verfahren nach Anspruch 1,
**dadurch gekennzeichnet, dass**
die Erinnerungsmeldung an eine mobile Nutzervorrichtung (10) übertragen und von dieser ausgegeben wird.

4. Verfahren nach einem der vorhergehenden Ansprüche,
**dadurch gekennzeichnet, dass**
das Fahrzeug (1) eine Klimatisierungseinheit (9) umfasst, die erfassten Benutzereingaben ferner Daten über eine geplante Klimatisierung des Fahrzeugs (1) umfassen, der erzeugte Zeitplan Zeitdaten zur Klimatisierung umfasst und die angezeigten Graphikdaten ferner Daten (115, 118) über die Klimatisierung des Fahrzeugs (1) umfassen.

5. Verfahren nach einem der vorhergehenden Ansprüche,
**dadurch gekennzeichnet, dass**
eine Temperatur innerhalb und/oder außerhalb des Fahrzeugs (1) erfasst wird und die angezeigten Graphikdaten ferner Daten über die erfasste Temperatur umfassen.

6. Verfahren nach einem der vorhergehenden Ansprüche,
**dadurch gekennzeichnet, dass**
die erzeugten Graphikdaten an eine mobile Nutzervorrichtung (10) übertragen und von dieser ausgegeben werden.

7. Verfahren nach einem der vorhergehenden Ansprüche,
**dadurch gekennzeichnet, dass**
die erfassten Benutzereingaben Zeitdaten zu Zeiträumen umfassen und diese Zeiträume bei der Erzeugung des Zeitplans priorisiert werden.

8. Verfahren nach einem der vorhergehenden Ansprüche,
**dadurch gekennzeichnet, dass**
von einem Server (11) Zeitdaten zu Zeiträumen erfasst werden und diese Zeiträume bei der Erzeugung des Zeitplans priorisiert werden.

9. Verfahren nach einem der vorhergehenden Ansprüche,
**dadurch gekennzeichnet, dass**
die Graphikdaten ferner graphische Objekte (120) zu Zeiträumen umfassen, die bei der Erzeugung des Zeitplans priorisiert werden.

10. Verfahren nach einem der vorhergehenden Ansprüche,
**dadurch gekennzeichnet, dass**
das übergreifende Graphikelement (101) eine Darstellung des Zifferblatts einer Uhr ist.

11. Verfahren nach einem der vorhergehenden Ansprüche,
**dadurch gekennzeichnet, dass**
die Graphikdaten so erzeugt werden, dass sie graphische Objekte umfassen, die mehreren alternativen Zeitplänen zugeordnet sind.

12. System zur Erzeugung und Ausgabe eines Zeitplans zum automatischen Laden eines elektrischen Energiespeichers (2) in einem Fahrzeug (1), bei dem
zumindest zwei Lademodi (110, 111) für den Energiespeicher (2) definiert sind, nämlich ein Sofortlademodus (110), bei dem der Ladevorgang sofort nach dem Verbinden des Energiespeichers (2) mit einer Ladeeinrichtung (8) beginnt, und ein Programmlademodus (111), bei dem der Beginn (103) des Ladevorgangs durch einen Zeitplan bestimmt wird,
umfassend:
eine Erfassungseinheit (3), die eingerichtet ist, Daten über einen Energieinhalt des Energiespeichers (2) und einen von der Ladeeinrichtung (8) bereitstellbaren Ladestrom zu erfassen,
eine Eingabeeinheit (4), die eingerichtet ist, Benutzereingaben zu dem automatischen Laden des elektrischen Energiespeichers (2) zu erfassen,
eine Recheneinheit (5), die eingerichtet ist, anhand der erfassten Daten und der Benutzereingaben der Zeitplan zum automatischen Laden des Energiespeichers (2) zu erzeugen, die eingerichtet ist, wenn das Fahrzeug (1) im Programmlademodus nicht mit einer Ladeeinrichtung (8) verbunden ist, anhand des Energieinhalts, des bereitstellbaren Ladestroms und eines Endzeitpunkts (104) des geplanten Ladevorgangs ein spätester Verbindungszeitpunkt zu bestimmen, zu dem das Fahrzeug (1) mit einer Ladeeinrichtung (8) verbunden werden muss, um einen Zielladezustand (123) bis zum geplanten Endzeitpunkt (104) zu erreichen, und die eingerichtet ist, ein Erinnerungszeitpunkt (122) zu bestimmen, der vor dem spätesten Verbindungszeitpunkt liegt, und
eine Steuereinheit (6), die eingerichtet ist, Graphikdaten mit graphischen Objekten zu erzeugen, wobei gleichzeitig graphische Objekte angezeigt werden, von denen ein erstes graphisches Objekt ein für alle Lademodi (110, 111) des Energiespeichers (2) übergreifendes Graphikelement (101) umfasst, welches eine Zeitskala darstellt und an dem weitere graphische Objekte angeordnet sind, die den Zeitdaten des Zeitplans zugeordnet sind, ein zweites graphisches Objekt (102) einem Anfangs- (103) und dem Endzeitpunkt (104) des geplanten Ladevorgangs zugeordnet ist, ein drittes graphisches Objekt (105, 105a, 105b, 105c) dem Ladestrom zugeordnet ist und ein viertes graphisches Objekt dem spätesten Verbindungszeitpunkt zugeordnet ist, und
eine Anzeigeeinheit (7), die eingerichtet ist, die erzeugten Graphikdaten auszugeben, und die eingerichtet ist, eine Erinnerungsmeldung auszugeben, wenn bei Erreichen des Erinnerungszeitpunkts (122) das Fahrzeug (1) nicht mit einer Ladeeinrichtung (8) verbunden ist.

13. System nach Anspruch 12,
**dadurch gekennzeichnet, dass**
die Anzeigeeinheit (7) eine mobile Nutzervorrichtung (10) umfasst.

## Claims

1. Method for generating and outputting a schedule for automatically charging an electrical energy store (2) in a vehicle (1), wherein
at least two charging modes (110, 111) for the energy store (2) are defined, viz., an immediate charging mode (110), in which the charging process begins immediately after the connection of the energy store (2) to a charging device (8), and a program charging mode (111), in which the beginning (103) of the charging process is determined by the schedule,
data on energy content of the energy store (2) and on a charging current which can be provided by the charging device (8) are detected,
user inputs to the automatic charging of the electrical energy store (2) are detected,
the schedule for automatically charging the energy store (2) is generated on the basis of the detected data and the user inputs,
if the vehicle (1) is not connected to a charging device (8) in program charging mode, a latest connection time point is determined on the basis of the energy content, the suppliable charging current, and an end time point (104) of the planned charging process, at which time point the vehicle (1) must be connected to a charging device (8) in order to achieve a target charging state (123) by the scheduled end time point (104),
a reminder time point (122) is determined which is before the latest connection time point, and a reminder message is issued if the vehicle (1) is not connected to a charging device (8) when the reminder time point (122) is reached, and
graphic data having several graphical objects are generated and simultaneously displayed on the basis of the schedule, wherein a first graphical object comprises a graphical element (101) which comprehends all charging modes (110, 111) of the energy store (2) and represents a timescale, and on which other graphical objects are arranged that are assigned to the time data of the schedule, a second graphical object (102) is assigned to an initial time point (103) and the end time point (104) of the planned charging process, a third graphical object (105, 105a, 105b, 105c) is assigned to the charging current, and a fourth graphical object is assigned to the latest connection time point.

2. Method according to claim 1,
**characterized in that**
the graphic data in program charging mode further comprise graphical objects (121) for repeating the programmed schedule.

3. Method according to claim 1,
**characterized in that**
the reminder message is transmitted to and output from a mobile user device (10).

4. Method according to one of the preceding claims,
**characterized in that**
the vehicle (1) comprises an air-conditioning unit (9), the detected user inputs further comprise data on a planned air-conditioning of the vehicle (1), the generated schedule comprises time data for air-conditioning, and the displayed graphic data further comprise data (115, 118) on the air-conditioning of the vehicle (1).

5. Method according to one of the preceding claims,
**characterized in that**
a temperature inside and/or outside of the vehicle (1) is detected, and the displayed graphic data further comprise data on the detected temperature.

6. Method according to one of the preceding claims,
**characterized in that**
the generated graphic data are transmitted to and output from a mobile user device (10).

7. Method according to one of the preceding claims,
**characterized in that**
the detected user inputs include time data for time periods, and these time periods are prioritized when generating the schedule.

8. Method according to one of the preceding claims,
**characterized in that**
a server (11) detects time data for time periods, and these time periods are prioritized when generating the schedule.

9. Method according to one of the preceding claims,
**characterized in that**
the graphic data further comprise graphical objects (120) on time periods prioritized when generating the schedule.

10. Method according to one of the preceding claims,
**characterized in that**
the comprehensive graphical element (101) is a representation of the dial of a clock.

11. Method according to one of the preceding claims,
**characterized in that**
the graphic data are generated so as to include graphical objects assigned to several alternative schedules.

12. System for generating and outputting a schedule for automatically charging an electrical energy store (2) in a vehicle (1), wherein
at least two charging modes (110, 111) for the energy store (2) are defined, viz., an immediate charging mode (110), in which the charging process begins immediately after the connection of the energy store (2) to a charging device (8), and a program charging mode (111), in which the beginning (103) of the charging process is determined by a schedule,
comprising:
a detection unit (3) which is set up to detect data on an energy content of the energy store (2) and on a charging current which can be provided by the charging device (8),
an input unit (4) which is set up to detect user inputs to the automatic charging of the electrical energy store (2),
a computing unit (5) which is set up to generate, on the basis of the detected data and the user inputs, the schedule for the automatic charging of the energy store (2) which, when the vehicle (1) is not connected to a charging device (8) in program charging mode, is set up to determine, by means of the energy content, the suppliable charging current, and an end time point (104) of the planned charging process, a latest connection time point at which the vehicle (1) must be connected to a charging device (8) in order to reach a target charging state (123) by the planned end time point (104), and which is set up to determine a reminder time point (122) which lies before the latest connection time point, and
a control unit (6) that is set up to generate graphic data with graphical objects,
wherein graphical objects are simultaneously displayed, of which a first graphical object comprises a graphical element (101) which comprehends all charging modes (110, 111) of the energy store (2) and which represents a timescale, and on which other graphical objects are arranged that are assigned to the time data of the schedule, a second graphical object (102) is assigned to an initial time point (103) and the end time point (104) of the planned charging process, a third graphical object (105, 105a, 105b, 105c) is assigned to the charging current, and a fourth graphical object is assigned to the latest connection time point, and
a display unit (7) which is set up to output the generated graphic data, and which is set up to output a reminder message when the vehicle (1) is not connected to a charging device (8) when the reminder time point (122) is reached.

13. System according to claim 12,
**characterized in that**
the display unit (7) comprises a mobile user device (10).

## Revendications

1. Procédé de génération et de sortie d'un programme de charge automatique d'un accumulateur d'énergie électrique (2) dans un véhicule (1), dans lequel
au moins deux modes de charge (110, 111) sont définis pour l'accumulateur d'énergie (2), c'est-à-dire un mode de charge immédiate (110), dans lequel le processus de charge commence immédiatement après la connexion de l'accumulateur d'énergie (2) à un dispositif de charge (8), et un mode de charge par programme (111), dans lequel le début (103) du processus de charge est déterminé par le programme,
des données concernant un contenu en énergie de l'accumulateur d'énergie (2) et un courant pouvant être fourni par le dispositif de charge (8) sont détectées,
des entrées utilisateur concernant la charge automatique de l'accumulateur d'énergie électrique (2) sont détectées,
le programme de charge automatique de l'accumulateur d'énergie (2) est généré au moyen des données détectées et des entrées utilisateur,
lorsque le véhicule (1) en mode de charge par programme n'est pas connecté à un dispositif de charge (8), au moyen du contenu en énergie, du courant de charge pouvant être fourni et d'une heure de fin (104) du processus de charge planifié, une heure de connexion ultérieure est déterminée, à laquelle le véhicule (1) doit être connecté à un dispositif de charge (8), pour atteindre un état de charge cible (123) à l'heure de fin (104) planifiée,
une heure de rappel (122) est déterminée, qui se situe avant l'heure de connexion ultérieure, et un message de rappel est émis, si lors de l'atteinte de l'heure de rappel (122), le véhicule (1) n'est pas connecté à un dispositif de charge (8), et
des données graphiques comprenant plusieurs objets graphiques sont générées au moyen du programme, un premier objet graphique comprenant un élément graphique général (101) pour tous les modes de charge (110, 111) de l'accumulateur d'énergie (2), lequel représente une échelle temporelle et sur lequel d'autres objets graphiques sont disposés, qui sont associés aux données temporelles du programme, un deuxième objet graphique (102) étant associé à une heure de début (103) et à l'heure de fin (104) du processus de charge planifié, un troisième objet graphique (105, 105a, 105b, 105c) étant associé au courant de charge et un quatrième objet graphique étant associé à l'heure de connexion ultérieure.

2. Procédé selon la revendication 1,
**caractérisé en ce**
**que** les données graphiques dans le mode de charge par programme comprennent en outre des objets graphiques (121) pour la répétition du programme programmé.

3. Procédé selon la revendication 1,
**caractérisé en ce**
**que** le message de rappel est transmis à un dispositif utilisateur mobile (10) et est émis par celui-ci.

4. Procédé selon l'une quelconque des revendications précédentes,
**caractérisé en ce**
**que** le véhicule (1) comprend une unité de climatisation (9), les entrées utilisateur comprennent en outre des données concernant une climatisation planifiée du véhicule (1), le programme généré comprend des données temporelles concernant la climatisation et les données graphiques affichées comprennent en outre des données (115, 118) concernant la climatisation du véhicule (1).

5. Procédé selon l'une quelconque des revendications précédentes,
**caractérisé en ce**
**qu**'une température à l'intérieur et/ou à l'extérieur du véhicule est détectée et les données graphiques affichées comprennent en outre des données concernant la température détectée.

6. Procédé selon l'une quelconque des revendications précédentes,
**caractérisé en ce**
**que** les données graphiques générées sont transmises à un dispositif utilisateur mobile (10) et sont émises par celui-ci.

7. Procédé selon l'une quelconque des revendications précédentes,
**caractérisé en ce**
**que** les entrées utilisateur détectées comprennent des données temporelles concernant des périodes de temps et ces périodes de temps doivent être priorisées lors de la génération du programme.

8. Procédé selon l'une quelconque des revendications précédentes,
**caractérisé en ce**
**que** les entrées utilisateur détectées comprennent des données temporelles concernant des périodes de temps et ces périodes de temps doivent être priorisées lors de la génération du programme.

9. Procédé selon l'une quelconque des revendications précédentes,
**caractérisé en ce**
**que** les données graphiques comprennent en outre des objets graphiques (120) concernant des périodes de temps qui sont priorisées lors de la génération du programme.

10. Procédé selon l'une quelconque des revendications précédentes,
**caractérisé en ce**
**que** l'élément graphique général (101) est une représentation du cadran d'une montre.

11. Procédé selon l'une quelconque des revendications précédentes,
**caractérisé en ce**
**que** les données graphiques sont générées de telle façon qu'elles comprennent des objets graphiques qui sont associés à plusieurs programmes alternatifs.

12. Système de génération et de sortie d'un programme de charge automatique d'un accumulateur d'énergie électrique (2) dans un véhicule (1), dans lequel
au moins deux modes de charge (110, 111) sont définis pour l'accumulateur d'énergie (2), c'est-à-dire un mode de charge immédiate (110), dans lequel le processus de charge commence immédiatement après la connexion de l'accumulateur d'énergie (2) à un dispositif de charge (8), et un mode de charge par programme (111), dans lequel le début (103) du processus de charge est déterminé par un programme,
comprenant :
une unité de détection (3), qui est conçue pour détecter des données concernant un contenu en énergie de l'accumulateur d'énergie (2) et un courant pouvant être fourni par le dispositif de charge (8),
une unité d'entrée (4), qui est conçue pour détecter les entrées utilisateur concernant la charge automatique de l'accumulateur d'énergie électrique (2),
une unité de calcul (5), qui est conçue pour, au moyen des données détectées et des entrées utilisateur, générer le programme de charge automatique de l'accumulateur d'énergie (2), qui est conçue pour, lorsque le véhicule (1) en mode de charge par programme n'est pas connecté à un dispositif de charge (8), au moyen du contenu en énergie, du courant de charge pouvant être fourni et d'une heure de fin (104) du processus de charge planifié, déterminer une heure de connexion ultérieure, à laquelle le véhicule (1) doit être connecté à un dispositif de charge (8), pour atteindre un état de charge cible (123) à l'heure de fin (104) planifiée, et qui est conçue pour déterminer une heure de rappel (122), qui est située avant l'heure de connexion ultérieure, et
une unité de commande (6), qui est conçue pour générer des données graphiques comprenant des objets graphiques,
des objets graphiques étant affichés simultanément, desquels un premier objet graphique comprend un élément graphique général (101) pour tous les modes de charge (110, 111) de l'accumulateur d'énergie (2), lequel représente une échelle temporelle et sur lequel d'autres objets graphiques sont disposés, qui sont associés aux données temporelles du programme, un deuxième objet graphique (102) est associé à une heure de début (103) et à l'heure de fin (104) du processus de charge planifié, un troisième objet graphique (105, 105a, 105b, 105c) est associé au courant de charge et un quatrième objet graphique est associé à l'heure de connexion ultérieure, et
une unité d'affichage (7), qui est conçue pour émettre les données graphiques générées, et qui est conçue pour émettre un message de rappel si le véhicule (1) n'est pas connecté à un dispositif de charge (8) lors de l'atteinte de l'heure de rappel (122).

13. Système selon la revendication 12,
**caractérisé en ce**
**que** l'unité d'affichage (7) comprend un dispositif utilisateur mobile (10).
